# EUROPÄISCHE PATENTANMELDUNG

(11) **EP 3 835 281 A1**
(43) Veröffentlichungstag der Anmeldung: **16.06.2021**
(21) Anmeldenummer: 19216106.5
(22) Anmeldetag: 13.12.2019
(51) Int. Cl.: C04B 35/626, C04B 35/628, C04B 35/80, C04B 41/00, C04B 35/565, C04B 41/53, C04B 41/91

(54) **VERFAHREN ZUR HERSTELLUNG EINES PLATTENFÖRMIGEN FORMKÖRPERS MIT EINER SILIZIUMKARBID-MATRIX**

(71) Anmelder: Siltronic AG, 81677 München (DE)
(72) Erfinder: Haberecht, Jörg, 09599 Freiberg (DE)
(74) Vertreter: Killinger, Andreas

(57) **Zusammenfassung**

Verfahren zur Herstellung eines plattenförmigen Formkörpers mit einer Siliziumkarbid-Matrix, in welche Fasern eingelagert sind, welche zum Aufbau eines lockeren Gefüges sowie zur Erhöhung der mechanischen Stabilität des Formkörpers beitragen, dadurch gekennzeichnet, dass zunächst die zur Einlagerung vorgesehenen Fasern bei Temperaturen zwischen 500°C und 1500 ° C, vorzugsweise zwischen 600 °C und 1200 °C unter Vakuum oder in Inertgasatmosphäre, z. B. Argon, pyrolysiert werden, dass die so behandelten Fasern mit einem Kieselsäureester oder mit fein-körnigem Siliziumdioxid ummantelt werden und anschließend einer Wärmebehandlung bei 900°C bis 1300 ° C unterzogen werden, bei welcher das auf der Faseroberfläche befindliche Siliziumdioxid in eine Siliziumkarbidschicht umgewandelt wird, dass danach die so beschichteten Fasern mit Binder, Silizium und Siliziumkarbid-Pulver unterschiedlicher Korngröße vermengt und gleichmäßig aufgemischt werden, dass das so erhaltene Gemisch in eine hierfür vorgesehene Form gegeben wird und bei ca. 130 °C bis 180 °C zu einem Formkörper ausgehärtet wird und dass der ausgehärtete Formkörper bei 800 °C bis 1200°C pyrolysiert wird, und dass der Formkörper bei 800 bis 1200°C einer Gasphasenätze ausgesetzt wird.

## Beschreibung

Gegenstand der Erfindung ist ein Verfahren zur Herstellung eines faserverstärkten porösen Formkörpers aus Siliciumcarbid.

### Stand der Technik / Probleme

Das Abscheiden einer epitaktischen Schicht auf der Vorderseite einer Halbleiterscheibe geschieht üblicherweise mittels CVD (chemical vapor deposition) in einem CVD-Reaktor, häufig in einem Einzelscheiben-Reaktor. Beispielsweise sei die US 2014 0 251 208 A1 erwähnt, in der ein solcher CVD-Reaktor beschrieben ist. Ein Einzelscheiben-Reaktor stellt zwischen einem oberen und einem unteren Deckel (dome) einen Reaktionsraum bereit, in dem ein Suszeptor von Suszeptor-Tragarmen einer Suszeptor-Tragwelle auf Suszeptor-Stützstiften gehalten wird.

Der Suszeptor und eine darauf abgelegte Halbleiterscheibe wird durch Lampenreihen (arrays), die über und unter den Deckeln angeordnet sind, mittels Wärmestrahlung erhitzt, während ein Abscheidegas über die, zum oberen Deckel weisende Vorderseite der Halbleiterscheibe geleitet wird.

Die Patentschrift WO 19 110 386 A1 offenbart, dass Teile des Suszeptors aus einem faserverstärkten porösen Formkörpers aus Siliciumcarbid gefertigt ist.

Die Patentschrift US 4 275 095 A beschreibt ein Verfahren zur Herstellung eines Materials (faserverstärkter poröser Formkörper aus Siliciumcarbid), das speziell für die Verwendung in Hochtemperatur-, korrosiven und errosiven Umgebungen geeignet ist, umfassend ein Kohlenstofffasersubstrat, einschließlich einer pyrolytischen Kohlenstoffhülle, die um jede Faser des Substrats herum ausgebildet ist; carbidkonforme Beschichtung über den beschichteten Fasern des Substrats; und eine undurchlässige äußere Schutzschicht aus metallischem Carbid, die um den gesamten Umfang des beschichteten Substrats herum ausgebildet ist. Gemäß dem offenbarten Verfahren wird die nachgiebige metallische Beschichtung auf die Fasern so aufgebracht, dass alle mechanischen Spannungen, die sich im Substrat aufgrund einer Diskrepanz zwischen dem Wärmeausdehnungskoeffizienten des faserigen Substrats und der Beschichtung aufbauen, effektiv aufgenommen werden.

Die Patentschrift US 5 403 401 A beschreibt einen flachen Substratträger aus faserverstärkten porösen Formkörpers aus Siliciumcarbid, umfassend eine bearbeitete Hauptfläche zum Tragen der zu behandelnden Substrate, eine der Hauptfläche gegenüberliegende Oberfläche und eine allseitige Beschichtung. Die Hauptoberfläche kann im Hinblick auf die Entfernung der behandelten Substrate von der Hauptoberfläche nach der Behandlung bearbeitet worden sein. Die gegenüberliegende Oberfläche wurde einer Behandlung unterzogen, dass sich die mechanischen Spannungen an beiden Oberflächen im Wesentlichen kompensieren.

Die Patentschrift EP 0 643 024 A2 beschreibt einen faserverstärkten porösen Formkörper aus Siliziumkarbid (faserverstärkten porösen Formkörpers aus Siliciumcarbid) sowie ein Verfahren zu deren Herstellung, bei dem die für die Verstärkung vorgesehenen Fasern zunächst bei Temperaturen zwischen 500 °C und 1500 °C, vorzugsweise zwischen 600°C und 1200°C, im Vakuum oder unter Schutzgasatmosphäre pyrolysiert werden, z.B. Argon werden die so behandelten Fasern mit einem Silikatester oder feinteiligem Siliziumdioxid ummantelt und anschließend einer Wärmebehandlung bei 900 °C bis 1300 °C unterzogen, wobei das auf der Faseroberfläche befindliche Siliziumdioxid in eine Siliziumkarbidschicht umgewandelt und die so ummantelten Fasern anschließend mit Bindemittel vermischt werden, Silizium- und Siliziumkarbidpulver unterschiedlicher Partikelgröße und gleichmäßiger Vermischung, wobei die so erhaltene Mischung in eine dafür vorgesehene Form gegeben und bei etwa 130 °C bis 180 °C ausgehärtet wird und der ausgehärtete Formkörper bei 800 °C bis 1200 °C pyrolysiert wird.

Die Patentschrift US 2004 266 181 A beschreibt einen Suszeptor für einen Halbleiterwafer, der während der Abscheidung einer Schicht auf einer Vorderfläche des Halbleiterwafers durch chemische Gasphasenabscheidung (CVD) aufgebracht wird, weist eine gasdurchlässige Struktur mit einer Porosität von mindestens 15 Prozent und einer Dichte von 0,5 bis 1,5 g/cm³ auf.

Die Patentschrift US 2005 244 581 A zeigt ein Verfahren zur Herstellung eines Teils aus undurchlässigem thermostrukturellem Verbundmaterial, wobei das Verfahren das Bilden eines porösen Substrats aus mindestens einer Faserverstärkung aus feuerfesten Fasern und das Verdichten der Verstärkung durch eine erste Phase aus Kohlenstoff und durch eine zweite Phase aus Siliziumkarbid umfasst. Das Verfahren wird dann fortgesetzt, indem das poröse Substrat mit einer Zusammensetzung auf Basis von geschmolzenem Silizium imprägniert wird, um die Poren des Substrats zu füllen.

Die Patentschrift US 2009 272 318 A beschreibt eine Vorrichtung zum Tragen eines Substrats während der Herstellung von Halbleiterkomponenten, umfassend eine im Wesentlichen flache Platte mit einer Oberseite, auf der das Substrat positioniert werden kann. Die Erfindung bezieht sich auch auf ein Verfahren zur Herstellung einer solchen Vorrichtung. Ziel der Erfindung ist es, eine Vorrichtung vorzusehen, die kostengünstig und einfach aufgebaut ist, aber auch den Durchtritt eines Prozessgases in Richtung Substrat unter bestimmten Herstellungsbedingungen ermöglicht, z.B. zur Zuführung eines Schutzgases zum Substrat oder zur Auflage des Substrats auf einem Luftpolster. Nach der Erfindung ist die Oberseite der Platte zumindest teilweise porös. Eine aufwendige und äußerst präzise Bearbeitung der Vorrichtung, wie sie nach dem derzeitigen Stand der Technik üblich ist, ist somit nicht erforderlich und ermöglicht es, die Vorrichtung wesentlich kostengünstiger herzustellen.

### Problembeschreibung

Suszeptoren, die aus faserverstärkten porösen Formkörpern aus Siliciumcarbid gefertigt werden, erweisen sich für die Epitaxie von Halbleiterscheiben im Prinzip als sehr vorteilhaft, wenn es zum Beispiel darum geht das sogenannte Autodoping bei pp+ Substraten zu vermeiden. Unter Autodoping versteht man dabei das ungewollte diffundieren von Gasen während der CVD Abscheidung von der Rückseite auf die Vorderseite der Halbleiterscheibe (bzw. umgekehrt). Der Effekt des Autodopings ist besonders groß, wenn die verwendeten Abscheidegase in der Epitaxie mit verhältnismäßig hohen Konzentrationen von Dotierstoffen versetzt wurden, was beispielsweise bei den sogenannten pp+ Substraten der Fall ist.

Ein zweiter Vorteil in der Verwendung von faserverstärkten porösen Formkörpers aus Siliciumcarbid für die Verwendung liegt darin, dass die Halbleiterscheibe besser auf dem Suszeptor positioniert werden kann und ein sogenanntes Verschwimmen, also eine Bewegung der Halbleiterscheibe aufgrund thermischer Ausdehnung verhindert wird.

Die Verwendung faserverstärkter poröser Formkörper aus Siliciumcarbid in der Epitaxie zeigt zwar Vorteile auf, die Langzeitstabilität dieses Materials als Verwendung im Epitaxiereaktor ist jedoch mangelhaft. Es zeigte sich, dass die verwendeten Bauteile, die aus faserverstärkten porösen Formkörper aus Siliciumcarbid gefertigt wurden, vermehrt Quelle für Partikel sind, die sich unter anderem auf die Halbleiterscheiben ablegen und dort für erhebliche Geometrieprobleme sorgen, so dass die Halbleiterscheiben aussortiert werden müssen und nicht für die weitere Verarbeitung geeignet sind.

### Aufgabe

Aufgabe der vorliegenden Erfindung ist es, ein modifiziertes Material für die Herstellung von Suszeptoren für die Epitaxie bereitzustellen. Ferne ist es Aufgabe, ein Verfahren zur Herstellung eines modifizierten Materials für die Herstellung von Suszeptoren für die Epitaxie zur Verfügung zu stellen.

### Lösung

Die Aufgabe der Erfindung wird gelöst durch die in den Ansprüchen beschriebenen Verfahren.

Die bezüglich der vorstehend aufgeführten Ausführungsformen des erfindungsgemäßen Verfahrens angegebenen Merkmale können entsprechend auf das erfindungsgemäße Produkt übertragen werden. Umgekehrt können die bezüglich der vorstehend ausgeführten Ausführungsformen des erfindungsgemäßen Produkts angegebenen Merkmale entsprechend auf das erfindungsgemäße Verfahren übertragen werden. Diese und andere Merkmale der erfindungsgemäßen Ausführungsformen werden in der Figurenbeschreibung und in den Ansprüchen erläutert. Die einzelnen Merkmale können entweder separat oder in Kombination als Ausführungsformen der Erfindung verwirklicht werden. Weiterhin können sie vorteilhafte Ausführungen beschreiben, die selbstständig schutzfähig sind.

### Detaillierte Beschreibung erfindungsgemäßer Ausführungsbeispiele

Mit dem erfindungsgemäßen Verfahren können faserverstärkte poröse Formkörper aus Siliciumcarbid bei großer Stabilität in Reaktoren, die für Epitaxie geeignet sind, ohne die genannten Nachteile genutzt werden.

Der Formkörper besteht im Wesentlichen aus einer Siliziumkarbid-Matrix, in welche Fasern eingelagert sind. Entsprechend der Erfindung sind hierbei zur Einlagerung in die Siliziumkarbid-Matrix Naturfasern vorgesehen. Diese Naturfasern können wahlweise die Fasern langstieliger Gräser und/oder der Halme von Getreidepflanzen sein. Auch kann es vorteilhaft sein, als Naturfasern solche Fasern aus Sisal und/oder Jute bzw. Baumwolle und/oder Viskose zu verwenden.

Entsprechend einer bevorzugten Ausführungsform eines solchen erfindungsgemäßen Formkörpers können die zur Einlagerung vorgesehenen Fasern als Gewebe ausgebildet sein, welches in der Siliziumkarbid-Matrix eingelagert ist.

Bevorzugt werden die zur Einlagerung vorgesehenen Fasern in einer Vorzugsrichtung ausgerichtet.

Bevorzugt werden die zur Einlagerung vorgesehenen Fasern in zwei zueinander senkrechten Vorzugsrichtungen ausgerichtet.

Die zur Einlagerung vorgesehenen Fasern werden zunächst bei Temperaturen zwischen 500°C und 1500 ° C, vorzugsweise zwischen 600 °C und 1200 °C unter Vakuum oder in Inertgasatmosphäre, z. B. Argon, pyrolysiert. Anschließend werden die so behandelten Fasern mit einem Kieselsäureester oder mit feinkörnigem Siliziumdioxid ummantelt und anschließend werden sie einer Wärmebehandlung bei 900°C bis 1300°C unterzogen, bei welcher das auf der Faseroberfläche befindliche Siliziumdioxid in eine Siliziumkarbidschicht umgewandelt wird.

Im Anschluss daran werden die so beschichteten Fasern mit Binder, Silizium und Siliziumkarbid-Pulver unterschiedlicher Korngröße vermengt und gleichmäßig aufgemischt.

Das so erhaltene Gemisch wird in eine hierfür vorgesehene Form gegeben und bei ca. 130 °C bis 180 °C zu einem Formkörper ausgehärtet.

Bevorzugt wird nach dem Trocknen des Formkörpers eine weitere Schicht aus Binder, Silizium und Siliziumkarbid-Pulver unterschiedlicher Korngröße versehen, die anschließend bei 130°C bis 180°C ausgehärtet wird.

Der getrocknete Formkörper wird bei 800 °C bis 1200°C pyrolysiert.

Anschließend wird der Formkörper bei 800 bis 1200°C einer Gasphasenätze ausgesetzt.

Vorzugsweise enthält Gasphasenätze als Ätzgas HCl.

Bevorzugt wird das Ätzen länger als eine Stunde durchgeführt.

Bevorzugt wird dieses Ätzen in einer Anlage durchgeführt, die auch für Epitaxie geeignet ist.

## Patentansprüche

1. Verfahren zur Herstellung eines plattenförmigen Formkörpers mit einer Siliziumkarbid-Matrix, in welche Fasern eingelagert sind, welche zum Aufbau eines lockeren Gefüges sowie zur Erhöhung der mechanischen Stabilität des Formkörpers beitragen, **dadurch gekennzeichnet,**
**dass** zunächst die zur Einlagerung vorgesehenen Fasern bei Temperaturen zwischen 500°C und 1500 ° C, vorzugsweise zwischen 600 °C und 1200 °C unter Vakuum oder in Inertgasatmosphäre, z. B. Argon, pyrolysiert werden, dass die so behandelten Fasern mit einem Kieselsäureester oder mit feinkörnigem Siliziumdioxid ummantelt werden und anschließend einer Wärmebehandlung bei 900°C bis 1300°C unterzogen werden, bei welcher das auf der Faseroberfläche befindliche Siliziumdioxid in eine Siliziumkarbidschicht umgewandelt wird,
**dass** danach die so beschichteten Fasern mit Binder, Silizium und Siliziumkarbid-Pulver unterschiedlicher Korngröße vermengt und gleichmäßig aufgemischt werden,
**dass** das so erhaltene Gemisch in eine hierfür vorgesehene Form gegeben wird und bei ca. 130 °C bis 180 °C zu einem Formkörper ausgehärtet wird und
**dass** der ausgehärtete Formkörper bei 800 °C bis 1200°C pyrolysiert wird, und dass der Formkörper bei 800 bis 1200°C einer Gasphasenätze ausgesetzt wird.

2. Verfahren nach Anspruch 1, **dadurch gekennzeichnet, dass** die Fasern in einer Vorzugsrichtung ausgerichtet sind.

3. Verfahren nach Anspruch 1 oder Anspruch 2, **dadurch gekennzeichnet, dass** die Fasern in zwei zueinander senkrechten Vorzugsrichtungen ausgerichtet sind.

4. Verfahren nach einem der Ansprüche 1 bis 3, **dadurch gekennzeichnet, dass** der Formkörper nach dem Austrocknen mit einer Schicht aus Binder, Silizium und Siliziumkarbid-Pulver unterschiedlicher Korngröße versehen wird, die anschließend bei 130°C bis 180°C ausgehärtet wird.

5. Verfahren nach einem der Ansprüche 1 bis 4, **dadurch gekennzeichnet, dass** der Formkörper in einer Anlage, die für Epitaxie geeignet ist, geätzt wird.
